# EUROPÄISCHE PATENTSCHRIFT

(11) **EP 3 376 682 B1**
(45) Veröffentlichungstag und Bekanntmachung des Hinweises auf die Patenterteilung: **04.05.2022**
(21) Anmeldenummer: 17161016.5
(22) Anmeldetag: 15.03.2017
(51) Int. Cl.: H04B 7/0491, H04B 7/0404

(54) **RICHTUNGSBEZOGENES SCHNITTSTELLENAUSWAHLVERFAHREN**
DIRECTION-RELATED INTERFACE SELECTION PROCEDURE
PROCÉDÉ DE SÉLECTION D'INTERFACES PAR RAPPORT À LA DIRECTION

(43) Veröffentlichungstag der Anmeldung: 19.09.2018
(73) Patentinhaber: BULL SAS, 78340 Les Clayes-sous-Bois (FR)
(72) Erfinder: Slanina, Peter, 3441 Judenau (AT)
(74) Vertreter: Novagraaf Technologies

(56) Entgegenhaltungen:
- GB-A- 2 448 510
- US-A1- 2008 122 716
- US-A1- 2014 105 054
- US-A1- 2015 229 382

## Beschreibung

Die Erfindung betrifft ein richtungsbezogenes Schnittstellenauswahlverfahren.

Im Schiffs- bzw. Luftverkehr ist aufgrund der zumeist ungehinderten Ausbreitung der Funkwellen eine Überbrückung sehr großer Distanzen möglich. Dies ist für die Abdeckung großer Gebiete von Vorteil, allerdings steigt aufgrund der mit der Entfernung verbundenen Laufzeit die Gefahr von Interferenzen, sodass die tatsächlich möglichen Kommunikationsentfernungen nicht erreicht werden können. Die auftretenden Interferenzen führen im Fall digitaler Kommunikation zu einer Einschränkung der über einen Kommunikationskanal übertragbaren Bandbreite. Durch Wahl spezieller Übertragungsprotokolle bzw. durch Vergrößerung der Bandbreite des Kommunikationskanals könnte dies kompensiert werden, jedoch ist die zur Verfügung stehende Bandbreite aufgrund internationaler Regulierungen beschränkt. Eine Möglichkeit zur Reduktion der Störanfälligkeit liegt darin, die spektrale Effizienz der Funkübertragungstechnologie zu verbessern, was zum derzeit fortschrittlichsten und effizientesten Übertragungsstandard LTE geführt hat.

Diese fortschrittlichen Übertragungsstandards sind jedoch speziell auf die Kommunikationssituation in eher kleinräumigen Funkzellen ausgelegt, insbesondere speziell für das innerstädtische Gebiet. Bei großräumigen Funkzellen, wie sie beispielsweise bei der See- bzw. Luftfahrt auftreten, bieten diese Kommunikationssysteme immer noch eine bestmögliche Datenübertragung über einen zur Verfügung stehenden Funkkanal, speziell auf Interferenzstörungen sind diese Kommunikationssysteme jedoch nicht optimiert.

Hinsichtlich der funktechnischen Ausrüstung von Wasser- bzw. Luftfahrzeugen ist bekannt, dass diese zumeist omnidirektionale Antennen verwenden, um sicherzustellen, dass unabhängig von der Bewegungsrichtung des Fahrzeugs, stets eine Funkverbindung zur Gegenstelle aufgebaut und aufrechterhalten werden kann. Diese omnidirektionalen Antennen haben den Vorteil, dass sie zumeist sehr einfach aufgebaut sind und nur sehr geringe Anforderungen an die korrekte Ausrichtung bestehen. Der Nachteil liegt jedoch darin, dass sie in alle Richtungen (bzw. in eine Halbkugel um die Antenne auf einem Fahrzeug) abstrahlen und vor allem auch aus diesen Richtungen empfangen. Dies kann beispielsweise zu dieser nachteiligen Situation führen, dass bei Empfang eines Signals einer erwünschten Gegenstation, insbesondere wenn das Signal aufgrund der Kommunikationsentfernung bereits sehr schwach ist, dieses von einem aus beliebiger Richtung eintreffendem, stärkerem Signal gestört wird. Aufgrund der beschränkten Anzahl der zur Verfügung stehenden Sendefrequenzen, werden Sendefrequenzen in regelmäßigen Abständen von Sendestationen (Basisstationen) wiederverwendet. Die Abstände werden aufgrund einer Netzplanung und/oder gemäß regulatorischer Vorgaben derart gewählt, dass eine gegenseitige Störung weitestgehend ausgeschlossen werden kann. Für Wasserfahrzeuge kann sich nun jedoch die Situation ergeben, dass landbasierte Basisstationen, die eigentlich nur bis zur Küste abstrahlen sollten, deutlich auf das offene Wasser abstrahlen und hier, aufgrund günstiger Ausbreitungsbedingungen, eine beträchtliche Reichweite schaffen. Insbesondere werden aufgrund atmosphärischer Effekte (vergleichbar einer Fata Morgana am Land) können teilweise beträchtliche Überreichweiten des Versorgungs- bzw. Abdeckungsgebiets erreicht werden.

Bewegt sich nun ein Wasserfahrzeug im Küstenbereich ist es also sehr wahrscheinlich, dass es in einen Bereich gerät, wo eine Basisstation an Land dieselbe Sendefrequenz benutzt, wie sie vom Kommunikationssystem des Wasserfahrzeugs verwendet wird.

Es ist natürlich auch die umgekehrte Situation möglich, dass auf See dieselbe Sendefrequenz einer Basisstation an Land verwendet wird, und somit ein sich bewegendes Wasserfahrzeug in den Abdeckungsbereich einer Basisstation fährt, und dort eine Störung verursacht.

Aus dem Stand der Technik ist bekannt, komplexe Antennen-Arrays aufzubauen, um dadurch eine Interferenzreduktion bzw. Kompensation zu erreichen. Bei Wasser- bzw. Luftfahrzeugen ist einerseits der Platz zur Anordnung eines solchen Antennen-Arrays zumeist nicht gegeben, zusätzlich führen sicherheitsrelevante Vorschriften dazu, dass die Anordnung und vor allem die Verkabelung eines komplexen Antennen-Arrays sehr aufwändig und damit sehr kostspielig werden.

Die Druckschrift US 2008/0122716 A1 beschreibt ein Verfahren und eine Vorrichtung für ein segmentiertes Antennensystem. Das Verfahren umfasst die Bestimmung einer Orientierung einer ersten Antenne, wobei die erste Antenne eine Vielzahl von Segmenten zum Senden und Empfangen von Signalen umfasst, die Bestimmung einer Richtung von der ersten Antenne zu einer zweiten Antenne, die Signale senden und/oder empfangen kann, und die Auswahl mindestens eines der Vielzahl der Segmente der ersten Antenne unter Verwendung der bestimmten Orientierung der ersten Antenne und der bestimmten Richtung.

Die Druckschrift US 2015/0229382 A1 beschreibt ein Antennenumschaltsystem, das eine Vielzahl von Richtungsantennen, die in einem Schiff montiert sind, um ein drahtloses Signal zu empfangen, einen Antennenumschalter, ein Modem zur Signalstärkebestimmung und eine Umschaltvorrichtung umfasst.

Die Druckschrift GB 2 448 510 A beschreibt ein Höchstfrequenzkommunikationsverfahren und eine entsprechende Vorrichtung, welche eine ersten Antenne, die Informationen bezüglich ihres Standortes zu einer zweiten Antenne sendet, die diese Informationen empfängt und benutzt, um einen Richtstrahl von der zweiten Antenne in Richtung der Standortes der ersten Antenne auszurichten, umfassen.

Die Druckschrift US 2014/0105054 A1 beschreibt ein Verfahren und ein System für ein Weitbereichshochleistungs-Adhoc-Mobilfunkkommunikationsnetzwerk, wobei ein schmaler Antennenstrahl, der durch eine Vielzahl von Antennenelementen gebildet wird, Radiosende- und -empfangsstationen und digitale räumliche Signalverarbeitung genutzt werden, um ein hochauflösendes Positionsbestimmungssystem, das im Kommunikationssystem integriert ist, bereitzustellen. Die relative Positions- und Richtungsorientierung aller Einheiten im Netzwerk wird durch gegenseitigen Austausch der Positionsdaten als ein Bestandteil des Kommunikationsprotokols durchgeführt.

Die Aufgabe der Erfindung liegt nun darin, für Wasser- und Luftfahrzeuge ein System bzw. ein Verfahren zu schaffen, um mit einfachen Komponenten eine Verbesserung der Qualität einer Weitbereichskommunikation zu erreichen. Insbesondere soll das Verfahren bzw. die Vorrichtung auf die spezifischen Anforderungen in der See- bzw. Luftfahrt optimiert sein.

Die Aufgabe der Erfindung wird durch ein richtungsbezogenes Schnittstellenauswahlverfahren gelöst, welches durch ein Kommunikationssteuerungs-Modul des Fahrzeugs ausgeführt wird. Das Verfahren dient zum Herstellen und Halten einer drahtlosen Hochfrequenz Kommunikationsverbindung zwischen einer Kommunikationsschnittstelle eines bewegten Fahrzeugs und einer Kommunikationsschnittstelle zumindest einer Gegenstation. Die Kommunikationsschnittstelle des Fahrzeugs weist zumindest zwei Sendevorrichtungen auf, welche Sendevorrichtungen jeweils eine sektorale Abstrahlcharakteristik aufweisen, ferner sind die Sendevorrichtungen über einen Kommunikationswegeschalter mit einer Kommunikationseinrichtung verbunden. Das Verfahren umfassend folgende Schritte.
- Ermitteln der Positionsdaten und der Ausrichtung des Fahrzeugs in Bezug zu einem globalen Koordinatensystem;
- Ermitteln von Lagedaten von zumindest einer Gegenstation;
- Extrahieren der Positionsdaten aus den Lagedaten und Bestimmen der Position der Gegenstation im globalen Koordinatensystem;
- Ermitteln eines Richtungsvektors vom Fahrzeug zur Gegenstelle;
- Ermitteln einer Zuordnung des Richtungsvektors zu einem Sektor bzw. zu einer Abstrahlcharakteristik;
- Ansteuern eines Kommunikationswegeschalters und Verbinden der Kommunikationseinrichtung mit der Sendevorrichtung, welcher der ermittelte Sektor bzw. die ermittelte Abstrahlcharakteristik zugeordnet ist;
- Aktivieren der Sendevorrichtung und Herstellen einer Kommunikationsverbindung zur Gegenstation und Aktivieren eines Kommunikationsprotokolls. Weiterhin umfasst das Verfahren, dass in einer Datenbank des Kommunikationssteuerungs-Moduls Positionsdaten zumindest einer Störquelle hinterlegt sind, beispielsweise einer ortsfesten Störquelle, und dass
- bei der Ermittlung des Richtungsvektors zusätzlich ein Störvektor, der Richtung und Entfernung vom Fahrzeug zur Störquelle festlegt, gebildet wird, und dass
- basierend auf dieser Entfernungsinformation das Kommunikationsprotokoll, insbesondere zeitlicher Ablauf und Lage von Kommunikationspausen derart angepasst werden, dass reflektierte Signale ausgeblendet bzw. weitestgehend unterdrückt werden.

Mit dieser Ausbildung ist gewährleistet, dass für die Kommunikationsverbindung jene Sendevorrichtung gewählt wird, deren Abstrahlcharakteristik in Richtung der Gegenstation ausgerichtet ist. Durch diese sektorale Einschränkung werden alle anderen Stationen ausgeblendet und können somit auch keine Kommunikationsstörungen verursachen. Insbesondere sind Interferenzen weitestgehend minimiert. Somit ist eine stabile, störungsfreie bzw. störungsarme Kommunikationsverbindung gewährleistet.

Unter einem Kommunikationswegeschalter wird hierin verstanden, eine der Sendevorrichtungen mit der Kommunikationseinrichtung zu verbinden. Dass kann bspw. im HF-Bereich erfolgen, indem die HF-Einheit der Sendevorrichtung aktiviert oder deaktiviert wird. Es ist aber genauso möglich, dass dieser Kommunikationswegeschalter durch einen IP-Router gebildet ist, und somit der Datenstrom von der Kommunikationseinrichtung selektiv an eine Sendevorrichtung weitergeleitet wird. Bevorzugt werden jene Sendevorrichtungen, die nicht mit der Kommunikationseinrichtung verbunden sind, ihre HF-Einheit deaktivieren.

Dahingehend ist auch die Aktivierung einer Sendevorrichtung zu verstehen, die darin bestehen kann, dass wie zuvor beschrieben, die HF-Einheit aktiviert bzw. deaktiviert wird. Somit kommt es zu einer/keiner Aussendung eines hochfrequenten Signals. Aufgrund technischer Gegebenheiten der Sendevorrichtung kann eine selektive Aktivierung/Deaktivierung der HF-Einheit nicht möglich sein, dann könnte beispielsweise auch die Versorgungsspannung, und damit die Sendevorrichtung, ein-/ausgeschaltet werden. Oder es wird lediglich der Datenstrom zur Sendeinrichtung unterbrochen, die Sendevorrichtung (inklusive HF-Einheit) bleibt aktiv.

Eine Weiterbildung besteht darin, dass bei aufrechter Kommunikationsverbindung, zyklisch der Richtungsvektor ermittelt wird und die die Übereinstimmung der aufrechten Zuordnung des Richtungsvektors zu einem Sektor bzw. zu einer Abstrahlcharakteristik geprüft wird. Da sich das Fahrzeug und/oder die Gegenstation bzw. Gegenstationen bewegen können, kann es vorkommen, dass die beim Aufbau der Kommunikationsverbindung gewählte Sendevorrichtung, aufgrund der Zuordnung des Richtungsvektors zu einem Sektor bzw. zu einer Abstrahlcharakteristik, nicht mehr optimal ist. Beispielsweise hat sich die Ausrichtung von Fahrzeug und Gegenstation zueinander soweit verändert, dass sich die Gegenstation aus der Abstrahlcharakteristik der gewählten Sendevorrichtung zu bewegen droht. Mit dieser Weiterbildung wird dies durch die zyklische Neubildung des Richtungsvektors erkannt, sodass darauf entsprechend reagiert werden kann.

Nach einer Weiterbildung ist vorgesehen, dass bei Verlust der Zuordnung
- die Zuordnung des Richtungsvektors zu einem Sektor bzw. zu einer Abstrahlcharakteristik erneut ermittelt wird;
- die aktive Sendevorrichtung deaktiviert wird;
- der Kommunikationswegeschalter umgesteuert wird, und die Kommunikationseinrichtung mit jener Sendevorrichtung verbindet, welcher der neu ermittelte Sektor bzw. die ermittelte Abstrahlcharakteristik zugeordnet ist;
- Aktivieren der Sendevorrichtung und Herstellen der Kommunikationsverbindung zur Gegenstation.

Mit dieser Weiterbildung ist eine automatische Übergabe bzw. Übertragung der Kommunikationsverbindung auf eine andere Sendevorrichtung gewährleistet, ohne dass dafür eine manuell auszulösende Aktion erforderlich ist.

Diesbezüglich besteht einer Weiterbildung auch darin, dass der Wechsel der aktiven Sendevorrichtung ohne Unterbrechung der aufrechten Kommunikationsverbindung durchgeführt wird. Zumeist werden sich die Abstrahlcharakteristiken der Sendevorrichtungen in den Randbereichen geringfügig überlappen. Ein Verlassen der Abstrahlcharakteristik der beim Aufbau der Kommunikationsvorrichtung gewählten Sendevorrichtung kann somit rechtzeitig erkannt werden, und ermöglicht die Umschaltung auf eine andere (benachbarte) Sendevorrichtung, ohne die bestehende Kommunikationsverbindung unterbrechen zu müssen. Für den Anwender bzw. den die Kommunikationsverbindung nutzenden Datendienst hat das den besonderen Vorteil, dass eine stabile Kommunikationsverbindung besteht.

Nach einer Weiterbildung ist ferner vorgesehen, dass mittels einer Empfangsvorrichtung des Fahrzeugs, die Positionsdaten des Fahrzeugs von einem globalen Satelliten Navigationssystem empfangen werden. Fahrzeuge haben vielfach eine Vorrichtung zum Empfang von Satelliten Navigationssignalen und zur Extraktion von Positionsdaten aus den empfangenen Signalpaketen. Diese Positionsdaten lassen sich nun in vorteilhafter Weise dazu verwenden, bei der Ermittlung des Richtungsvektors, die Position des eigenen Fahrzeugs festzulegen. In vorteilhafter Weise kann das gegenständliche Verfahren auf bestehende Systeme zugreifen und ist keine zusätzliche aufwändige und kostspielige Installation erforderlich.

Eine Weiterbildung besteht darin, dass von einem automatisierten Identifikationssystem des Fahrzeugs und/oder der Gegenstation, zyklisch Lagedaten ausgesendet werden, bevorzugt als Nachrichtenpakete, und von einer Empfangsvorrichtung des Fahrzeugs empfangen werden. Aufgrund Internationaler Vereinbarungen zur Sicherung des Schiffverkehrs (SOLAS), muss jedes größere Schiff ein automatisches Identifikationssystem (AIS) an Bord haben. Im Luftverkehr gibt es mit dem ADS-B eine

Äquivalenz. Diese Weiterbildung hat den Vorteil, dass das gegenständliche Verfahren auf Identifikationsdaten zugreifen kann, die aufgrund der sicherheitsrelevanten Bedeutung, eine hohe Genauigkeit aufweisen und vor allem stets aktuell gehalten sind. In Abhängigkeit von der anwendbaren Sicherheitsklasse, liegt bei AIS die Aktualisierungsrate im Bereich von 2 Sekunden - bis 3 Minuten.

Nach einer Weiterbildung ist vorgesehen, dass aus den empfangenen Lagedaten eine Identifikationskennung extrahiert wird, und Fahrzeug- und/oder als Gegenstationskennung in einer Datenbank des Kommunikationssteuerungs-Moduls abgelegt werden. Gemäß internationaler Vorschiften trägt jedes Fahrzeug (Wasser- oder Luftfahrzeug) eine eindeutige Kennung. In einer Weiterbildung werden zusätzlich auch die aktuell empfangenen Lagedaten in der Datenbank abgelegt. Dadurch wird es möglich, ohne einen vorherigen Austausch von Kommunikationsparameter oder Austausch von Kennungen, die entsprechende Sendevorrichtung zu aktivieren und eine Kommunikationsverbindung zu einer spezifischen Gegenstation aufzubauen, da die erforderlichen Parameter aus der Datenbank ausgelesen werden können.

Für ein Unternehmen bzw. eine Organisation ist es zumeist lediglich von Bedeutung, dass zwischen den eigenen Fahrzeugen eine zuverlässige Kommunikationsverbindung besteht. Daher ist nach einer Weiterbildung vorgesehen, dass einer Auswahl von hinterlegten Gegenstationskennungen eine Gruppenkennung zugewiesen und hinterlegt wird. Mit dieser Weiterbildung lassen sich jede Gegenstationen zusammenfassen bzw. markieren, die bspw. zur Fahrzeugflotte eines Unternehmens gehören. Die Gegenstationskennung kann bspw. ein eindeutiger Fahrzeugname oder ein eindeutiges Fahrzeugkennzeichen sein, die Gegenstandskennung kann aber auch durch eine Kennung des Kommunikationsnetzwerks bzw. der Sendevorrichtung gebildet sein, sodass sich nur jene Sendevorrichtungen mit dem Kommunikationsnetz verbinden können, welche die entsprechende Kennung aufweisen. Von Bedeutung ist jedenfalls, dass keine Kennung über die Kommunikationsverbindung übertragen werden muss, da diese hinterlegt sind.

Dahingehend besteht eine Weiterbildung darin, dass die Ermittlung des Richtungsvektors nur für jene Gegenstationen durchgeführt wird, für die in der Datenbank eine Gruppenkennung hinterlegt ist. Mit dieser Weiterbildung lässt sich die Anzahl der zu betrachtenden Gegenstationen deutlich reduzieren, da Gegenstationen mit einer Identifikationskennung, für die keine Gruppenkennung hinterlegt ist, nicht beachtet werden.

Neben einer Kommunikation mit ortsveränderlichen Gegenstationen kann vorgesehen sein, dass auch mit ortsfesten Basisstationen eine Kommunikationsverbindung aufgebaut werden soll. Eine Weiterbildung besteht daher darin, dass in der Datenbank Positionsdaten zumindest einer ortsfesten Gegenstation hinterlegt sind. Soll eine Kommunikationsverbindung zu einer Basisstation aufgebaut werden, kann die entsprechende Sendevorrichtung sofort bestimmt und aktiviert werden, da der Richtungsvektor, aufgrund der Kenntnis der Position der Basisstation, unmittelbar bestimmt werden kann.

Bei einer gewünschten Kommunikation mit einer Gegenstation kommt es immer auch zu einer Beeinflussung der Kommunikationsstrecke, insbesondere der Funkverbindung, durch Störquellen. Als Störquellen werden hierin andere Sendestationen verstanden, insbesondere andere Basisstationen, die auf derselben Sendefrequenz arbeiten, wie sie für die eigene HF-Kommunikationsverbindung verwendet wird. Wie bereits zuvor ausgeführt, kann es durch die Bewegung des Fahrzeugs und vorkommen, dass dieses in den Versorgungsbereich einer Basisstation gerät, die dieselbe Sendefrequenz verwendet. Neben solchen aktiven Störquellen, können auch passive Störquellen vorhanden sein, welche die Ausbreitung der von der eigenen Sendevorrichtung ausgehende HF-Kommunikationsverbindung behindern bzw. beeinträchtigen. Da für die gegenständliche HF-Kommunikationsverbindung Sendefrequenzen zum Einsatz kommen, die quasi Sichtverbindung zwischen Sender und Empfänger erfordern, können Objekte im Ausbreitungspfad die Kommunikation beeinträchtigen. Solche Objekte können hinsichtlich ihrer Masse, Materialeigenschaften und/oder räumlichen Ausdehnung, eine Störung der Ausbreitung verursachen. Daher werden in der Datenbank des Kommunikationssteuerungs-Moduls Positionsdaten zumindest einer Störquelle hinterlegt, beispielsweise einer ortsfesten Störquelle, und es wird bei der Ermittlung des Richtungsvektors zusätzlich ein Störvektor, der Richtung und Entfernung vom Fahrzeug zur Störquelle festlegt, gebildet, und es werden basierend auf dieser Entfernungsinformation das Kommunikationsprotokoll, insbesondere zeitlicher Ablauf und Lage von Kommunikationspausen derart angepasst, dass reflektierte Signale ausgeblendet bzw. weitestgehend unterdrückt werden. Beispielsweise ist daher vorgesehen, dass in der Datenbank Positionsdaten zumindest einer ortsfesten Störquelle hinterlegt sind und dass
- bei der Ermittlung des Richtungsvektors zusätzlich ein Störvektor vom Fahrzeug zur ortsfesten Gegenstation gebildet wird. Diese Betrachtung bezieht sich im Speziellen nur auf die Situation im eigenen Netzwerk. Hier werden, ganz allgemein betrachtet, alle Stationen der anderen Kommunikationsnetze, grundsätzlich als potentielle Störquellen angesehen. Für diese anderen Stationen gilt die Betrachtung umgekehrt analog, hier kann allerdings der Sender des (eigenen) Fahrzeugs zu einer Störquelle werden. Eine für das eigene Netz als Störquelle eingestufte Gegenstation kann und wird im fremden Netz eine/die erwünschte Sendestation bilden. Da jedes LTE/WiMAX oder WiFi Gerät einen Sender und Empfänger aufweist, sind die gegenseitigen Abhängigkeiten äußerst komplex. Die Störquelle kann bspw. eine ortsfeste Basisstation sein, es kann sich jedoch auch um eine bewegliche Station handeln, bspw. ein Fahrzeug eines anderen Kommunikationsnetzes. Mit dieser Weiterbildung können somit auch die gegenseitigen Abhängigkeiten berücksichtigt werden und ermöglichen so den Betrieb mehrerer, sich teilweise überlappenden Kommunikationsnetze, wobei eine gegenseitige Störung reduziert werden kann.

Der ermittelte Störvektor kann in die Zuordnung des Richtungsvektors zur Abstrahlcharakteristik einfließen, sodass jene Sendevorrichtung aktiviert wird, bei der sich die Gegenstation innerhalb der Abstrahlcharakteristik befindet und eine Störung durch die Störquelle reduziert/minimiert wird, und/oder die Störungen durch den Sender des Fahrzeugs auf den Empfänger der Störquelle reduziert / minimiert wird.

Eine vorteilhafte Weiterbildung besteht ferner darin, dass die Lagedaten mittels einer Empfangsvorrichtung von der zumindest einen Gegenstation empfangen werden. Gemäß internationaler Vereinbarungen sind Wasser- und Luftfahrzeuge verpflichtet, wesentliche Kenndaten ihre Position und Bewegung betreffen, automatisch allen anderen Verkehrsteilnehmern bereitzustellen. Bei dem im Schiffsverkehr üblichen AIS umfassen diese Lagedaten Position (LAT, LON), Kurs (COG), Geschwindigkeit (SOG), Zeit (UTC) und Kursrichtung (Heading).

Neben sich bewegenden Fahrzeugen kann eine Kommunikationsverbindung auch zu ortsfesten Gegenstationen aufgebaut werden müssen. Daher ist vorgesehen, dass die Lagedaten im Kommunikationssteuerungs-Modul hinterlegt sind, insbesondere in einer Datenbank. Ortsfeste Gegenstationen können bspw. Basisstationen sein, es kann sich aber auch um bekannte (feste) Störstationen handeln. Solche die die eigene Kommunikation stören können, aber auch solche, die durch die eigene Kommunikation nicht gestört werden dürfen.

Bei der Bewegung eines Fahrzeugs wird sich die Situation ergeben, dass die Zuordnung des Richtungsvektors zu einem Sektor bzw. einer Abstrahlcharakteristik auf einen benachbarten bzw. angrenzenden Sektor wechseln wird. Um einen unterbrechungsfreien Übergang gewährleisten zu können ist gemäß einer Weiterbildung vorgesehen, dass vom Kommunikationswegeschalter die Kommunikationseinrichtung mit zwei Sendevorrichtungen verbunden wird, welche beiden Sendevorrichtungen eine überlappende sektorale Abstrahlcharakteristik aufweisen. Da die Abstrahlcharakteristik keine scharfe Abgrenzung aufweist, wird es an einer Sektorgrenze zu einer Überlappung der Abstrahlcharakteristiken zweier Sendevorrichtungen kommen.

Die Erfindung wird auch durch ein Fahrzeug, insbesondere ein Wasser- oder Luftfahrzeug gelöst. Dieses umfasst eine drahtlose Hochfrequenz-Kommunikationsschnittstelle, und eine damit verbundene Kommunikationseinrichtung.

Die Hochfrequenz-Kommunikationsschnittstelle weist zumindest zwei Sendevorrichtungen auf, welche Sendevorrichtungen jeweils eine sektorale Abstrahlcharakteristik aufweisen, welche Abstrahlcharakteristik einem Teilbereich des Raums um das Fahrzeug entspricht.

Ferner ist jede Sendevorrichtung über einen Kommunikationswegeschalter mit der Kommunikationseinrichtung verbunden, und der Kommunikationswegeschalter ist mit einem Kommunikationssteuerungs-Modul verbunden, welches mittels des Kommunikationswegeschalters zum selektiven Verbinden der Kommunikationseinrichtung mit einer Sendevorrichtung ausgebildet ist. Vorgesehen ist ferner eine mit dem Kommunikationssteuerungs-Modul verbundene Empfangsvorrichtung, die zum Empfang von Nachrichtenpakten eines automatisierten Identifikationssystems ausgebildet ist.

Das Kommunikationssteuerungs-Modul weist ein Auswertungsmodul auf, welches aus Positionsdaten des Fahrzeugs und aus Positionsdaten, welche aus empfangenen Nachrichtenpakten extrahiert wurden, einen Richtungsvektor bildet, eine Zuordnung des Richtungsvektors zu einem Sektor bzw. einer Abstrahlcharakteristik ermittelt und als Selektionswert an den Kommunikationswegeschalter übermittelt, wobei der Kommunikationswegeschalter basierend auf dem Selektionswert einen Kommunikationsweg zwischen der Kommunikationseinrichtung und einer der Sendevorrichtungen festlegt. Ferner weist das Kommunikationssteuerungs-Modul eine Datenbank auf, wobei die Datenbank ausgebildet ist, Positionsdaten zumindest einer Störquelle, beispielsweise einer ortsfesten Störquelle, zu speichern. Weiterhin ist das Auswertungsmodul ausgebildet, bei der Ermittlung des Richtungsvektors zusätzlich einen Störvektor, der Richtung und Entfernung vom Fahrzeug zur Störquelle festlegt, zu bilden, wobei basierend auf dieser Entfernungsinformation ein Kommunikationsprotokoll, insbesondere zeitlicher Ablauf und Lage von Kommunikationspausen derart angepasst werden, dass reflektierte Signale ausgeblendet bzw. weitestgehend unterdrückt werden.

Eine Weiterbildung besteht darin, dass jede Sendevorrichtung eine Hochfrequenz-Einheit und eine Antenne aufweist. Dies hat den Vorteil, dass der Verkabelungsaufwand deutlich reduziert wird. Eine Übertragung von hochfrequenten (unsymmetrischen) Signalen über längere Kabelstreckung ist nachteilig, da aufgrund der unvermeidlichen Kabeldämpfung, ein Teil des Nutzsignals verloren geht. Ferner ist die Verlegung solcher HF-Kabel speziell in Wasser- bzw. Luftfahrzeugen aufwändig und daher entsprechend kostspielig. Da anspruchsgemäß jede Sendevorrichtung eine HF-Einheit aufweist, kann die Übertragung der Kommunikationssignale von der Kommunikationseinrichtung zur Sendeeinrichtung mittels einfacher Kabelsysteme verlustarm im Basisband erfolgen. Unter HF-Einheit wird im Wesentlichen und nicht abschließend, ein Modulator und ein HF-Verstärker mit Antennenanpassung verstanden.

Von Vorteil ist auch eine Weiterbildung, nach der jede Sendevorrichtung auch eine Empfangsvorrichtung aufweist. Da eine Kommunikationsverbindung bidirektional ausgebildet sein kann, ist es von Vorteil, wenn die Sendevorrichtung auch eine Empfangsvorrichtung aufweist, welche bevorzugt ebenfalls eine sektorale Empfangscharakteristik aufweist. Bevorzugt stimmen Abstrahl- und Empfangscharakteristik überein.

Eine Weiterbildung besteht auch darin, dass die Hochfrequenz-Kommunikationsschnittstelle vier Sendevorrichtungen aufweist, wobei die Abstrahlcharakteristik jeder Sendevorrichtung einen azimutalen Teilbereich zwischen 85° und 100° abdeckt, insbesondere zwischen 90° und 95°. Diese Weiterbildung gewährleistet, dass der gesamte azimutale Bereich um das Fahrzeug von den Sendevorrichtungen abgedeckt wird, wobei jede Sendevorrichtung lediglich einen Teilabschnitt abdeckt, und somit alle eventuell möglichen Störungen aus anderen Sektoren nicht erfasst, bzw. aus Gründen der Abstrahlcharakteristik nicht erfassen kann.

Eine Weiterbildung besteht ferner darin, dass am Fahrzeug ein automatisiertes Identifikationssystem vorhanden ist, welches zum zyklischen Senden von Identifikations-Nachrichtenpakten ausgebildet ist. Bei Wasserfahrzeugen ist dies bevorzugt ein AIS, welches den Regelungen und Anforderungen der SOLAS unterliegt. Bei Luftfahrzeugen ist dies ADS-B. Der Vorteil dieser Systeme liegt insbesondere darin, dass es einen Internationalen, bzw. sehr weit verbreiteten Standard dafür gib und dieser auch angewendet wird. Ferner wird mit diesen Systemen eine Sicherung des Schiffs- bzw. Luftverkehrs realisiert, sodass die ausgesendeten Nachrichtenpakete und die darin codiert enthaltene Positions- und Bewegungsinformation hohen Genauigkeitsanforderungen entsprechen.

Eine Weiterbildung besteht darin, dass am Fahrzeug ein Empfänger für ein Globales Satelliten Navigationssystem vorhanden ist, welcher Empfänger Positionsdaten des Fahrzeugs bereitstellt. Somit kann das gegenständliche Verfahren auf Positionsdaten zugreifen, ohne dafür einen eigenen Empfänger vorsehen zu müssen.
Fig. 1 Zeigt eine schematische Übersichtsdarstellung eines Fahrzeugs mit den Komponenten, zur und bei der Durchführung des gegenständlichen Verfahrens.
Fig. 2 Zeigt eine Kommunikationssituation unter Anwendung des gegenständlichen Verfahrens.
Fig. 3 Zeigt weitere Kommunikationssituationen unter Anwendung des gegenständlichen Verfahrens

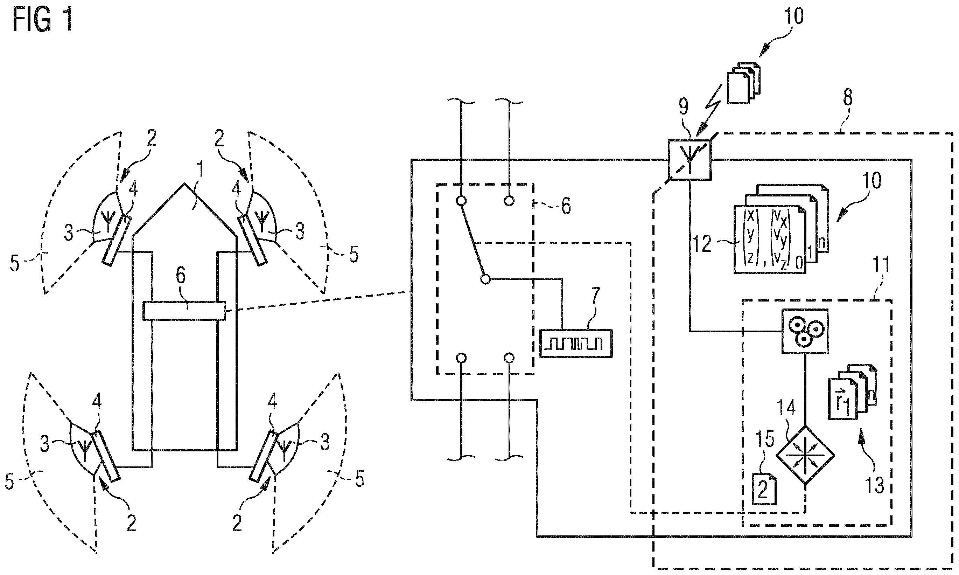

Fig. 1 zeigt ein gegenständliches Fahrzeug 1, insbesondere beispielhaft ein Wasserfahrzeug, auf dem das gegenständliche Schnittstellenauswahlverfahren ausgeführt wird. Das Fahrzeug 1 weist mehrere Sendevorrichtungen 2 auf, welche Sendevorrichtungen 2 zusammen eine Kommunikationsschnittstelle bilden. Die Sendevorrichtungen 2 umfassen jeweils eine Antenne 3 und eine Hochfrequenzeinheit 4, wobei die Antenne 3 eine in azimutaler Richtung ausgerichtete, sektorale Abstrahlcharakteristik 5 aufweist. Insgesamt decken alle Abstrahlcharakteristiken 5 den gesamten azimutalen Raum um das Fahrzeug 1 ab.

Die Sendevorrichtungen 2 sind über einen Kommunikationswegeschalter 6 mit einer Kommunikationseinrichtung 7 verbunden. Die Kommunikationseinrichtung 7 ist beispielsweise und nicht abschließend ein Datenendgerät eines Datenverarbeitungssystems bzw. eines Kommunikationssystems.

Der Kommunikationswegeschalter 6 ist ferner mit einem Kommunikationssteuerungs-Modul 8 verbunden, welches mittels des Kommunikationswegeschalters 6, die Kommunikationseinrichtung 7 selektiv mit einer der Sendevorrichtungen 2 verbindet.

Ferner ist mit dem Kommunikationssteuerungs-Modul 8 eine Empfangsvorrichtung 9 verbunden, welche zum Empfang von Nachrichtenpaketen 10 eines automatisierten Identifikationssystems von zumindest einer Gegenstation ausgebildet ist. Die Empfangsvorrichtung 9 kann nun Teil des Kommunikationssteuerungs-Moduls 8 sein, oder es ist eine eigenständige Empfangsvorrichtung des Fahrzeugs 1. In der Figur ist dies durch die nur teilweise Umgrenzung der Empfangsvorrichtung 9 dargestellt.

Ferner weist das Kommunikationssteuerungs-Modul 8 ein Auswertungsmodul 11 auf, welches aus den übermittelten und von der Empfangsvorrichtung 9 empfangenen Nachrichtenpaketen 10 Positionsdaten 12 extrahiert. Aus den, aus empfangenen Nachrichtenpaketen 10 extrahierten Positionsdaten 12 zumindest einer Gegenstation (Index 1 bis n der Positionsdaten), und ermittelten Positionsdaten (12) des Fahrzeugs 1 (Index 0 der Positionsdaten), wird ein Richtungsvektor 13 gebildet. Dann wird eine Zuordnung 14 des Richtungsvektors 13 zu einem Sektor bzw. einer Abstrahlcharakteristik ermittelt und als Selektionswert 15 an den Kommunikationswegeschalter 6 übermittelt. Von diesem wird hernach, basierend auf dem Selektionswert 15, die Kommunikationseinrichtung 7 mit der, dem Selektionswert 15 entsprechenden Sendevorrichtung 2 verbunden, wodurch die Kommunikationseinrichtung 7 über die Sendevorrichtung, insbesondere über den HF Teil 4 und die Antenne 3, eine Kommunikationsverbindung zur Gegenstation herstellt.

Es wird festgehalten, dass die genannten Nachrichtenpakete 10 als Nachrichten von automatischen Identifikationssystemen (AIS) anderer Fahrzeuge in der Umgebung zu verstehen sind und insbesondere eine Kennung des Fahrzeugs, Positionsdaten, Bewegungsdaten und einen Bewegungsstatus enthalten.

Aus Darstellungsgründen sind die Details u.a. des Kommunikationswegeschalters 6 und des Kommunikationssteuerungs-Moduls 8 eigenständig dargestellt. Es ist jedoch zu verstehen, dass diese Komponenten dem Fahrzeug zugeordnet sind und bspw. Teil eines Kommunikationssystems des Fahrzeugs sind.

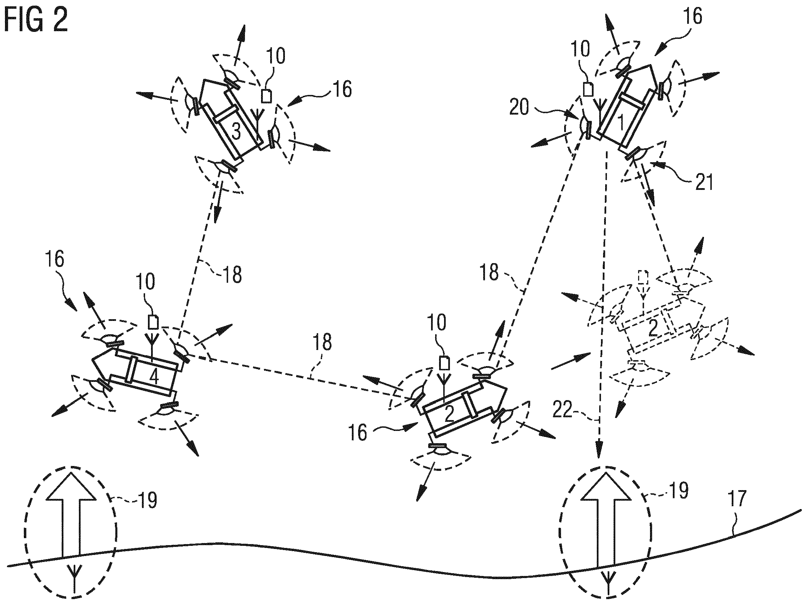

Fig. 2 zeigt eine mögliche Kommunikationssituation in der Schifffahrt. Dabei sind vier Schiffe 16 vor einer Küste 17 unterwegs. Dargestellt ist, dass zwischen den Schiffen 3 und 4, zwischen den Schiffen 4 und 2 und zwischen den Schiffen 2 und 1 eine Kommunikationsverbindung 18 besteht. Es wird festgehalten, dass diese Kommunikationsverbindungen 18 nicht gleichzeitig bestehen müssen, aber können.

An der Küste sind ferner zwei Störquellen 19 vorhanden, die elektromagnetische Wellen in Richtung der See abstrahlen. Bei diesen Störquellen 19 handelt es sich bevorzugt um Basisstationen (an Land), welche dieselbe Sendefrequenz verwenden, wie die eigene HF-Kommunikationsschnittstelle.

Von jedem der Schiffe 16 werden Lagedaten als Nachrichtenpaket 10 eines automatisierten Identifikationssystems ausgesandt und von allen anderen Schiffen 16 empfangen und die darin enthaltenen Positions- und Bewegungsdaten ausgewertet. Somit hat jedes Schiff, insbesondere jedes Kommunikationssteuerungsmodul, zu jedem Zeitpunkt Kenntnis von der Position, der Ausrichtung und der Bewegung der anderen sich im Verbund befindlichen Schiffe. Bewegt sich beispielsweise Schiff 2 ein Stück in Richtung seiner Fahrtrichtung weiter, wird dies vom Kommunikationssteuerungs-Modul auf Schiff 1 erkannt und die erste Sendevorrichtung 20 deaktiviert und die zweite Sendevorrichtung 21 aktiviert. Für Schiff 2 ändert sich nichts, da sowohl für die Kommunikation mit Schiff 1 als auch für die Kommunikation mit Schiff 4, weiterhin dieselbe Sendevorrichtung aktiv bleiben kann. Somit ist zu jedem Zeitpunkt eine möglichst optimale Konfiguration der Sendevorrichtungen gegeben, wodurch rein durch die verfahrensgemäße Auswahl der Sendevorrichtungen ein großer Teil möglicher Störquellen ausgeblendet wird.

Neben der Ermittlung eines Richtungsvektors zwischen dem Fahrzeug und der Gegenstation wird noch ein Störvektor 22 ermittelt der die Richtung und die Entfernung zu einer Störquelle 19 festlegt. Basierend auf dieser Entfernungsinformation wird das Kommunikationsprotokoll, insbesondere der zeitliche Ablauf und die Lage von Kommunikationspausen derart angepasst , dass reflektierte Signale ausgeblendet bzw. weitestgehend unterdrückt werden.

Ist die genaue Position von Störquellen nicht bekannt, aber bspw. im Küstenbereich damit zu rechnen, können bspw. künstliche Störquellen angenommen werden, und mit einer festen Position in der Datenbank hinterlegt werden. Somit kann die Kommunikation proaktiv auf eine zu erwartende Störung vorbereitet werden.

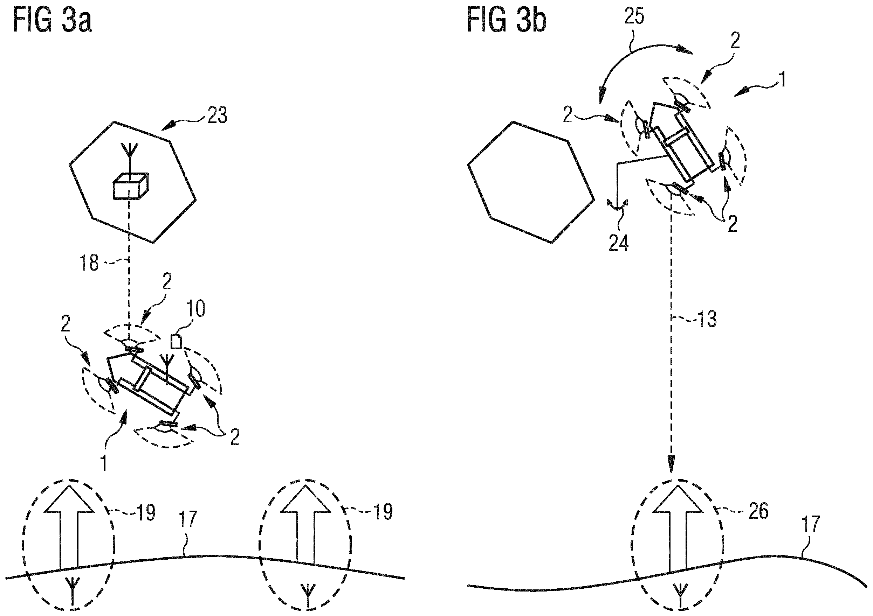

Die Fig. 3 zeigt mögliche praktische Anwendungsfälle des gegenständlichen Verfahrens.

Fig. 3a zeigt die Situation, bei der ein bewegliches Fahrzeug eine Kommunikationsverbindung 18 mit einer ortsfesten Gegenstation 23 aufbaut. Die Position und Ausrichtung des Fahrzeugs 1 kann wiederum durch empfangene Nachrichtenpakete 10 eines eigenen, automatischen Identifikationssystems erfolgen, oder es wird die eigene Position mittels des Empfangs einer Positionsinformation eines globalen Sattelitennavigationssystems ermittelt. Da die Gegenstation 23 ortsfest ist, können die Positionsdaten der Gegenstation 23 aber auch im Kommunikationssteuerungsmodul des Fahrzeugs 1 hinterlegt sein, bevorzugt in einer Datenbank. Es ist jedoch auch möglich, dass die Gegenstation 23 ein automatisiertes Identifikationssystem aufweist und somit zyklisch Lagedaten als Nachrichtenpakete 10 aussendet, welche vom Empfänger des Fahrzeugs 1 empfangen und daraus die Lagedaten der Gegenstation 23 extrahiert werden. Durch Bildung des Richtungsvektors vom Fahrzeug 1 zur Gegenstation 23 kann jene Sendevorrichtung 2 ermittelt werden, deren Abstrahlcharakteristik in Richtung der Gegenstation 2 ausgerichtet ist. Im dargestellten Fall wären es die beiden Sendevorrichtungen auf der rechten Seite des Fahrzeuges. Unter Berücksichtigung der jeweiligen Abstrahlcharakteristik, zur Erreichung einer möglichsten hohen Kommunikationsqualität, wird bei der Zuordnung des Richtungsvektors zu einem Sektor bzw. einer Abstrahlcharakteristik, die bestmöglich ausgerichtete Sendevorrichtung 2 selektiert. In Fig. 3a ist dies die Sendevorrichtung 2 rechts vorne am Fahrzeug 1.

Durch die Wahl dieser Sendevorrichtung 2 ist gewährleistet, dass keine Signalkomponente einer Störquelle 19 in die Abstrahlcharakteristik der Sendevorrichtung 2 gelang, und somit die Kommunikation zwischen Fahrzeug 1 und Gegenstation 23 stören kann.

Fig. 3b zeigt ein weiteres mögliches Anwendungsbeispiel bei dem ein Fahrzeug 1 an einer festen Position vor der Küste 17 vor Anker 24 liegt. Die Position des Fahrzeuges 1 im globalen Koordinatensystem ist somit weitestgehend festgelegt, die geringfügigen Schwankungen der Position des Fahrzeugs 1 um die Ankerposition 24, sind im Hinblick auf die Wahl der Sendevorrichtung 2 zu vernachlässigen. Aufgrund von Strömungen bzw. wetterbedingten Einflüssen, wird es jedoch sehr wohl vorkommen, dass das Fahrzeug seine Ausrichtung um die Ankerposition 24 ändert 25.

An Land 17 können nun Kommunikationsstationen 26 vorgesehen sein, die einen vom Fahrzeug 1 unabhängigen Kommunikationsdienst bereitstellen. Aufgrund regulatorischer Vorgaben ist zumeist gefordert, dass die vom Fahrzeug ausgehenden Kommunikationsverbindungen, den Kommunikationsdienst der Kommunikationsstation 26 nicht stören darf. Dies bedeutet beispielsweise, dass bei einer Kommunikation vom Fahrzeug in Richtung der Kommunikationsstation 26, vom Fahrzeug 1 keine Sendefrequenzen der Kommunikationsstation 26 benutzt werden, welche diese stören würden. Ebenso kann gefordert sein, dass die Sendeleistung in Richtung der Kommunikationsstation 26 soweit reduziert werden muss, dass es auch daraus zu einer Störung der Kommunikationsstation 26 kommen kann. Im Speziellen könnte beispielsweise auch gefordert sein, dass vom Fahrzeug 1 in Richtung der Kommunikationsstation 26 keinerlei Funksignal ausgesendet wird.

Ebenfalls wie bereits in Fig. 3a beschrieben, kann die Position der Kommunikationsstation 26 im Kommunikationssteuerungsmodul des Fahrzeugs 1 hinterlegt sein bzw. kann von der Kommunikationsstation 26 ein Nachrichtenpaket mit Lagedaten ausgesendet werden.

Mit dem gegenständlichen Verfahren wird vom Fahrzeug 1, aufgrund der Kenntnis der eigenen Positionsdaten und insbesondere der eigenen Ausrichtung in Bezug zum globalen Koordinatensystem, und der Kenntnis der Position der Kommunikationsstation 26, ein Richtungsvektor 13 ermittelt werden. Jene Sendevorrichtung 2 des Fahrzeugs 1 wird daraufhin dementsprechend konfiguriert, um die Vorgaben zu erfüllen.

Ein weiteres mögliches Anwendungsszenario ist bereits in Fig. 2 dargestellt.

Fig. 2 zeigt Kommunikationsverbindungen 18 zwischen mehreren Fahrzeugen, insbesondere zwischen mehreren Schiffen 16. Neben einer direkten Kommunikation zwischen zwei Schiffen, beispielsweise zwischen Schiff 1 und Schiff 2, ist es in einem derartigen vermaschten Netzwerk ferner möglich, dass eine Kommunikationsstation als Relay dient. Dies ermöglicht eine Kommunikation zwischen zwei Stationen, die auf direktem Weg nicht kommunizieren könnten.

Beispielsweise könnte eine Kommunikation zwischen den Schiffen 2 und 3 aufzubauen sein, wobei jedoch zwischen diesen beiden Schiffen 16 eine direkte Verbindung nicht möglich ist. Beispielsweise könnte sich dazwischen eine Landmasse befinden, welche eine Kommunikationsverbindung verhindert. Es könnte jedoch auch sein, dass zwischen den beiden eine starke Störquelle vorhanden ist, welche ebenfalls den Aufbau einer Kommunikationsverbindung verhindert. Die gegenständlichen Kommunikationssysteme nutzen Signalfrequenzen, die eine weitestgehend optische Ausbreitungscharakteristik aufweisen, sodass zwischen den Gegenstationen meist eine Sichtverbindung bestehen muss. Das gemäß regulatorischer Vorschriften auf Seefahrzeugen vorhandene automatische Identifikationssystem (AIS)verwendet eine Kommunikationsfrequenz im VHF Bereich, wo aufgrund der Signalausbreitung als Raumwelle, Objekte in der direkten Verbindung zwischen zwei Kommunikationsstationen meist geringer stören. Somit ist es möglich, das Schiff 3 die Nachrichtenpakete 10 des automatisierten Identifikationssystems von Schiff 2 empfängt und somit dessen Position kennt. Da auch die Position von Schiff 4 bekannt ist, kann nun Schiff 4 als Relay Station aktiviert werden, um die Kommunikationsverbindung 18 von Schiff 3 zu Schiff 4 und weiter von Schiff 4 zu Schiff 2 aufzubauen.

Diese Funktionalität eines vermaschten Netzwerks hat den besonderen Vorteil, dass dadurch Kommunikationsstörungen aufgrund von Ausbreitungsbedingungen bzw. aufgrund von Störsignalen minimiert werden, indem ein alternativer Kommunikationsweg über die dann als Relay arbeitenden Zwischenstationen aufgebaut wird. Selbstverständlich ist vorgesehen, dass auch mehrere Relays in der Kommunikationsverbindung angeordnet sein können. Auf Fig. 2 bezogen könnte dies bedeuteten, dass eine Kommunikation zwischen den Schiffen 3 und 1 über die Schiffe 4 und 2 als Relays geleitet wird.

## Patentansprüche

1. Richtungsbezogenes Schnittstellenauswahlverfahren ausgeführt durch ein Kommunikationssteuerungs-Modul (8) eines Fahrzeugs (1),
zum Herstellen und Halten einer drahtlosen Hochfrequenz Kommunikationsverbindung (18),
zwischen einer Kommunikationsschnittstelle eines bewegten Fahrzeugs (1),
und einer Kommunikationsschnittstelle zumindest einer Gegenstation,
wobei
die Kommunikationsschnittstelle des Fahrzeugs (1) zumindest zwei Sendevorrichtungen (2) aufweist,
welche Sendevorrichtungen (2) jeweils eine sektorale Abstrahlcharakteristik (5) aufweisen, und
die Sendevorrichtungen (2) über einen Kommunikationswegeschalter (6) mit einer Kommunikationseinrichtung (7) verbunden sind,
umfassend die Schritte
- Ermitteln von Positionsdaten und einer Ausrichtung des Fahrzeugs in Bezug zu einem globalen Koordinatensystem;
- Ermitteln von Lagedaten von zumindest einer Gegenstation;
- Extrahieren von Positionsdaten (12) aus den Lagedaten und Bestimmen der Position der Gegenstation im globalen Koordinatensystem;
- Ermitteln eines Richtungsvektors (13) vom Fahrzeug (1) zur Gegenstelle;
- Ermitteln einer Zuordnung (14) des Richtungsvektors (13) zu einem Sektor bzw. zu einer Abstrahlcharakteristik;
- Ansteuern eines Kommunikationswegeschalters (6) und Verbinden der Kommunikationseinrichtung (7) mit der Sendevorrichtung (2), welcher der ermittelte Sektor bzw. die ermittelte Abstrahlcharakteristik zugeordnet ist;
- Aktivieren der Sendevorrichtung (2) und Herstellen einer Kommunikationsverbindung (18) zur Gegenstation und Aktivieren eines Kommunikationsprotokolls,
**dadurch gekennzeichnet, dass**
in einer Datenbank des Kommunikationssteuerungs-Moduls (8) Positionsdaten zumindest einer Störquelle hinterlegt sind, beispielsweise einer ortsfesten Störquelle, und dass
- bei der Ermittlung des Richtungsvektors zusätzlich ein Störvektor, der Richtung und Entfernung vom Fahrzeug zur Störquelle festlegt, gebildet wird, und dass
- basierend auf dieser Entfernungsinformation das Kommunikationsprotokoll, insbesondere zeitlicher Ablauf und Lage von Kommunikationspausen derart angepasst werden, dass reflektierte Signale ausgeblendet bzw. weitestgehend unterdrückt werden.

2. Schnittstellenauswahlverfahren nach Anspruch 1, **dadurch gekennzeichnet, dass** bei aufrechter Kommunikationsverbindung (18), zyklisch der Richtungsvektor (13) ermittelt wird und die die Übereinstimmung der aufrechten Zuordnung (14) des Richtungsvektors (13) zu einem Sektor bzw. zu einer Abstrahlcharakteristik (5) geprüft wird.

3. Schnittstellenauswahlverfahren nach Anspruch 2, **dadurch gekennzeichnet, dass** bei Verlust der Zuordnung
- die Zuordnung (14) des Richtungsvektors (13) zu einem Sektor bzw. zu einer Abstrahlcharakteristik (5) erneut ermittelt wird;
- die aktive Sendevorrichtung (2) deaktiviert wird;
- der Kommunikationswegeschalter (6) umgesteuert wird, und die Kommunikationseinrichtung (7) mit jener Sendevorrichtung (2) verbindet, welcher der neu ermittelte Sektor bzw. die ermittelte Abstrahlcharakteristik (5) zugeordnet ist;
- Aktivieren der Sendevorrichtung (2) und Herstellen der Kommunikationsverbindung (18) zur Gegenstation.

4. Schnittstellenauswahlverfahren nach Anspruch 3, **dadurch gekennzeichnet, dass** der Wechsel der aktiven Sendevorrichtung (2) ohne Unterbrechung der aufrechten Kommunikationsverbindung (18) durchgeführt wird und dass vom Kommunikationswegeschalter die Kommunikationseinrichtung (7) mit zwei Sendevorrichtungen (2) verbunden wird, welche beiden Sendevorrichtungen eine überlappende sektorale Abstrahlcharakteristik aufweisen.

5. Schnittstellenauswahlverfahren nach einem der Ansprüche 1 bis 4, **dadurch gekennzeichnet, dass** mittels einer Empfangsvorrichtung (9) des Fahrzeugs, die Positionsdaten des Fahrzeugs (1) von einem globalen Satelliten Navigationssystem empfangen werden.

6. Schnittstellenauswahlverfahren nach einem der Ansprüche 1 bis 4, **dadurch gekennzeichnet, dass** von einem automatisierten Identifikationssystem des Fahrzeugs (1) und/oder der Gegenstation, zyklisch Lagedaten ausgesendet werden und von einer Empfangsvorrichtung des Fahrzeugs (1) empfangen werden.

7. Schnittstellenauswahlverfahren nach Anspruch 6, **dadurch gekennzeichnet, dass** aus den empfangenen Lagedaten eine Identifikationskennung extrahiert wird, und als Fahrzeug-und/oder als Gegenstationskennung in der Datenbank des Kommunikationssteuerungs-Moduls (8) abgelegt werden.

8. Schnittstellenauswahlverfahren nach Anspruch 7, **dadurch gekennzeichnet, dass** einer Auswahl von hinterlegten Gegenstationskennungen eine Gruppenkennung zugewiesen und hinterlegt wird.

9. Schnittstellenauswahlverfahren nach Anspruche 8, **dadurch gekennzeichnet, dass** die Ermittlung des Richtungsvektors (13) nur für jene Gegenstationen durchgeführt wird, für die in der Datenbank eine Gruppenkennung hinterlegt ist.

10. Schnittstellenauswahlverfahren nach einem der Ansprüche 1 bis 9, **dadurch gekennzeichnet, dass** in der Datenbank Positionsdaten zumindest einer ortsfesten Gegenstation hinterlegt sind.

11. Schnittstellenauswahlverfahren nach einem der Ansprüche 1 bis 10, **dadurch gekennzeichnet, dass** die Lagedaten mittels einer Empfangsvorrichtung (9) von der zumindest einen Gegenstation empfangen werden.

12. Schnittstellenauswahlverfahren nach einem der Ansprüche 1 bis 10, **dadurch gekennzeichnet, dass** die Lagedaten im Kommunikationssteuerungs-Modul (8) hinterlegt sind, insbesondere in der Datenbank.

13. Schnittstellenauswahlverfahren nach einem der Ansprüche 1 bis 3 und 5 bis 12, **dadurch gekennzeichnet, dass** vom Kommunikationswegeschalter die Kommunikationseinrichtung (7) mit zwei Sendevorrichtungen (2) verbunden wird, welche beiden Sendevorrichtungen eine überlappende sektorale Abstrahlcharakteristik aufweisen.

14. Fahrzeug (1), insbesondere Wasser- oder Luftfahrzeug, umfassend eine drahtlose Hochfrequenz-Kommunikationsschnittstelle, und eine damit verbundene Kommunikationseinrichtung (7),
wobei- die Hochfrequenz-Kommunikationsschnittstelle zumindest zwei Sendevorrichtungen (2) aufweist, welche Sendevorrichtungen (2) jeweils eine sektorale Abstrahlcharakteristik (5) aufweisen, welche Abstrahlcharakteristik (5) einem Teilbereich des Raums um das Fahrzeug (1) entspricht, wobei
- jede Sendevorrichtung (2) über einen Kommunikationswegeschalter (6) mit der Kommunikationseinrichtung (7) verbunden ist, wobei
- der Kommunikationswegeschalter (6) mit einem Kommunikationssteuerungs-Modul (8) verbunden ist, welches mittels des Kommunikationswegeschalters (6) zum selektiven Verbinden der Kommunikationseinrichtung (7) mit einer Sendevorrichtung (2) ausgebildet ist, wobei
- eine mit dem Kommunikationssteuerungs-Modul (7) verbundene Empfangsvorrichtung (9) vorgesehen ist, die zum Empfang von Nachrichtenpakten (10) eines automatisierten Identifikationssystems ausgebildet ist, wobei
- das Kommunikationssteuerungs-Modul (8) ein Auswertungsmodul (11) aufweist, welches aus Positionsdaten (12) des Fahrzeugs und aus Positionsdaten (12), welche aus empfangenen Nachrichtenpakten (10) extrahiert wurden, einen Richtungsvektor (13) bildet, eine Zuordnung (14) des Richtungsvektors (13) zu einem Sektor bzw. einer Abstrahlcharakteristik ermittelt und als Selektionswert (15) an den Kommunikationswegeschalter (6) übermittelt, wobei
- der Kommunikationswegeschalter (6) basierend auf dem Selektionswert (15) einen Kommunikationsweg zwischen der Kommunikationseinrichtung (7) und einer der Sendevorrichtungen (2) festlegt,
**dadurch gekennzeichnet, dass**
- das Kommunikationssteuerungs-Modul (8) eine Datenbank aufweist und dass die Datenbank ausgebildet ist, Positionsdaten zumindest einer Störquelle, beispielsweise einer ortsfesten Störquelle, zu speichern und dass
- das Auswertungsmodul (11) weiterhin ausgebildet ist, bei der Ermittlung des Richtungsvektors zusätzlich einen Störvektor, der Richtung und Entfernung vom Fahrzeug (1) zur Störquelle festlegt, zu bilden, und dass
- basierend auf dieser Entfernungsinformation ein Kommunikationsprotokoll, insbesondere zeitlicher Ablauf und Lage von Kommunikationspausen derart angepasst werden, dass reflektierte Signale ausgeblendet bzw. weitestgehend unterdrückt werden.

15. Fahrzeug nach Anspruch 14, **dadurch gekennzeichnet, dass** jede Sendevorrichtung eine Hochfrequenz-Einheit (4) und eine Antenne (3) aufweist.

16. Fahrzeug nach Anspruch 15, **dadurch gekennzeichnet, dass** jede Sendevorrichtung (2) auch eine Empfangsvorrichtung aufweist.

17. Fahrzeug nach einem der Ansprüche 14 bis 16, **dadurch gekennzeichnet, dass** die Hochfrequenz-Kommunikationsschnittstelle vier Sendevorrichtungen (2) aufweist, wobei die Abstrahlcharakteristik (5) jeder Sendevorrichtung (2) einen azimutalen Teilbereich zwischen 85° und 100° abdeckt, insbesondere zwischen 90° und 95°.

18. Fahrzeug nach einem der Ansprüche 14 bis 17, **dadurch gekennzeichnet, dass** am Fahrzeug (1) ein automatisiertes Identifikationssystem vorhanden ist, welches zum zyklischen Senden von Identifikations-Nachrichtenpakten (10) ausgebildet ist.

19. Fahrzeug nach einem der Ansprüche 14 bis 18, **dadurch gekennzeichnet, dass** am Fahrzeug ein Empfänger für ein Globales Satelliten Navigationssystem vorhanden ist, welcher Empfänger Positionsdaten des Fahrzeugs bereitstellt.

## Claims

1. Direction-related interface selection method carried out by a communication control module (8) of a vehicle (1)
for establishing and maintaining a wireless high-frequency communication link (18) between a communication interface of a moving vehicle (1)
and a communication interface of at least one remote station,
the communication interface of the vehicle (1) having at least two transmitting devices (2), which transmitting devices (2) each have a sector-shaped radiation pattern (5), and
the transmitting devices (2) being connected to a communication apparatus (7) via a communication path switch (6),
comprising the steps of
- determining position data and an orientation of the vehicle in relation to a global coordinate system;
- determining location data from at least one remote station;
- extracting position data (12) from the location data and determining the position of the remote station in the global coordinate system;
- determining a directional vector (13) from the vehicle (1) to the remote terminal;
- determining an assignment (14) of the directional vector (13) to a sector or to a radiation pattern;
- actuating a communication path switch (6) and connecting the communication apparatus (7) to the transmitting device (2) to which the determined sector or the determined radiation pattern is assigned;
- activating the transmitting device (2) and establishing a communication link (18) to the remote station and activating a communication protocol,
**characterized in that**
position data of at least one source of interference, for example a stationary source of interference, are stored in a database of the communication control module (8), and **in that**
- when determining the directional vector, an interference vector which defines the direction and distance from the vehicle to the source of interference is also formed, and **in that**
- on the basis of this distance information, the communication protocol, in particular the timing and location of communication pauses, can be adapted in such a way that reflected signals are tuned out or largely suppressed.

2. Interface selection method according to claim 1, **characterized in that** when the communication link (18) is active, the directional vector (13) is determined cyclically and the consistency of the active assignment (14) of the directional vector (13) with a sector or with a radiation pattern (5) is checked.

3. Interface selection method according to claim 2, **characterized in that** if the assignment is lost,
- the assignment (14) of the directional vector (13) to a sector or to a radiation pattern (5) is determined again;
- the active transmitting device (2) is deactivated;
- the communication path switch (6) is reversed and the communication apparatus (7) connects to the transmitting device (2) to which the newly determined sector or the determined radiation pattern (5) is assigned;
- the transmitting device (2) is activated and the communication link (18) to the remote station is established.

4. Interface selection method according to claim 3, **characterized in that** the active transmitting device (2) is changed without interrupting the active communication link (18) and **in that** the communication apparatus (7) is connected to two transmitting devices (2) by means of the communication path switch, which two transmitting devices have an overlapping sector-shaped radiation pattern.

5. Interface selection method according to any of claims 1 to 4, **characterized in that** the position data of the vehicle (1) are received from a global satellite navigation system by means of a receiving device (9) of the vehicle.

6. Interface selection method according to any of claims 1 to 4, **characterized in that** location data are transmitted cyclically by an automated identification system of the vehicle (1) and/or the remote station and are received by a receiving device of the vehicle (1).

7. Interface selection method according to claim 6, **characterized in that** an identifier is extracted from the received location data and stored as a vehicle and/or remote station identifier in the database of the communication control module (8).

8. Interface selection method according to claim 7, **characterized in that** a group identifier is assigned to a selection of stored remote station identifiers and stored.

9. Interface selection method according to claim 8, **characterized in that** the directional vector (13) is only determined for the remote stations for which a group identifier is stored in the database.

10. Interface selection method according to any of claims 1 to 9, **characterized in that** position data of at least one stationary remote station are stored in the database.

11. Interface selection method according to any of claims 1 to 10, **characterized in that** the location data are received by the at least one remote station by means of a receiving device (9).

12. Interface selection method according to any of claims 1 to 10, **characterized in that** the location data are stored in the communication control module (8), in particular in the database.

13. Interface selection method according to any of claims 1 to 3 or 5 to 12, **characterized in that** the communication apparatus (7) is connected to two transmitting devices (2) by means of the communication path switch, which two transmitting devices have an overlapping sector-shaped radiation pattern.

14. Vehicle (1), in particular a watercraft or aircraft, comprising a wireless high-frequency communication interface and a communication apparatus (7) connected thereto,
- the high-frequency communication interface having at least two transmitting devices (2), which transmitting devices (2) each have a sector-shaped radiation pattern (5), which radiation pattern (5) corresponds to a partial region of the space around the vehicle (1),
- each transmitting device (2) being connected to the communication apparatus (7) via a communication path switch (6),
- the communication path switch (6) being connected to a communication control module (8) which is designed to selectively connect the communication apparatus (7) to a transmitting device (2) by means of the communication path switch (6),
- a receiving device (9) connected to the communication control module (7) being provided, which device is designed to receive message packets (10) from an automated identification system,
- the communication control module (8) having an evaluation module (11) which forms a directional vector (13) from position data (12) of the vehicle and from position data (12) extracted from received message packets (10), determining an assignment (14) of the directional vector (13) to a sector or a radiation pattern and transmitting said assignment as a selection value (15) to the communication path switch (6),
- the communication path switch (6) defining a communication path between the communication apparatus (7) and one of the transmitting devices (2) on the basis of the selection value (15),
**characterized in that**
- the communication control module (8) has a database and **in that** the database is designed to store position data of at least one source of interference, for example a stationary source of interference, and **in that**
- the evaluation module (11) is also designed, when determining the directional vector, to additionally form an interference vector which defines the direction and distance from the vehicle (1) to the interference source, and **in that**
- on the basis of this distance information, a communication protocol, in particular the timing and location of communication pauses, can be adapted in such a way that reflected signals are tuned out or largely suppressed.

15. Vehicle according to claim 14, **characterized in that** each transmitting device has a high-frequency unit (4) and an antenna (3).

16. Vehicle according to claim 15, **characterized in that** each transmitting device (2) also has a receiving device.

17. Vehicle according to any of claims 14 to 16, **characterized in that** the high-frequency communication interface has four transmitting devices (2), the radiation pattern (5) of each transmitting device (2) covering an azimuthal sub-range of between 85° and 100°, in particular between 90° and 95°.

18. Vehicle according to any of claims 14 to 17, **characterized in that** an automated identification system is present on the vehicle (1), which system is designed to cyclically transmit identification message packets (10).

19. Vehicle according to any of claims 14 to 18, **characterized in that** a receiver for a global satellite navigation system is present on the vehicle, which receiver provides position data of the vehicle.

## Revendications

1. Procédé de sélection d'interfaces dépendant de la direction, exécuté par un module de commande de communication (8) d'un véhicule (1),
servant à établir et à maintenir une liaison de communication à haute fréquence sans fil (18), entre une interface de communication d'un véhicule (1) en mouvement,
et une interface de communication d'au moins une station distante,
dans lequel
l'interface de communication du véhicule (1) présente au moins deux dispositifs d'émission (2), lesquels dispositifs d'émission (2) présentent respectivement une caractéristique de rayonnement sectorielle (5), et
les dispositifs d'émission (2) sont connectés à un système de communication (7) par l'intermédiaire d'un commutateur de voie de communication (6),
le procédé comprenant les étapes
- de détermination de données de position et d'une orientation du véhicule par rapport à un système de coordonnées global ;
- de détermination des données de localisation à partir d'au moins une station distante ;
- d'extraction de données de position (12) des données de localisation et de détermination de la position de la station distante dans le système de coordonnées global ;
- de détermination d'un vecteur directionnel (13) depuis le véhicule (1) vers l'emplacement distant ;
- de détermination d'une affectation (14) du vecteur directionnel (13) à un secteur ou à une caractéristique de rayonnement ;
- de commande d'un commutateur de voie de communication (6) et de connexion du système de communication (7) au dispositif d'émission (2) auquel le secteur déterminé ou la caractéristique de rayonnement déterminée est affecté(e) ;
- d'activation du dispositif d'émission (2) et d'établissement d'une liaison de communication (18) avec la station distante, et d'activation d'un protocole de communication, **caractérisé en ce que**
les données de position d'au moins une source d'interférences, notamment d'une source d'interférences fixe, sont stockées dans une base de données du module de commande de communication (8), et **en ce que**,
- lors de la détermination du vecteur directionnel, un vecteur d'interférence qui définit la direction et la distance du véhicule à la source d'interférences est également formé, et **en ce que**,
- sur la base de ces informations de distance, le protocole de communication, en particulier la durée et l'emplacement des pauses de communication, peut être adapté de telle manière que les signaux réfléchis sont masqués ou supprimés le plus possible.

2. Procédé de sélection d'interfaces selon la revendication 1, **caractérisé en ce que**, lorsque la liaison de communication (18) est établie, le vecteur directionnel (13) est déterminé de façon cyclique, et la correspondance de l'affectation (14) établie du vecteur directionnel (13) à un secteur ou à une caractéristique de rayonnement (5) est vérifiée.

3. Procédé de sélection d'interfaces selon la revendication 2, **caractérisé en ce que**, si l'affectation est perdue,
- l'affectation (14) du vecteur directionnel (13) à un secteur ou à une caractéristique de rayonnement (5) est à nouveau déterminée ;
- le dispositif d'émission (2) actif est désactivé ;
- le commutateur de voie de communication (6) est inversé et le système de communication (7) se connecte au dispositif d'émission (2) auquel le secteur nouvellement déterminé ou la caractéristique de rayonnement (5) nouvellement déterminée est affecté(e) ;
- le dispositif d'émission (2) est activé et la liaison de communication (18) avec la station distante est établie.

4. Procédé de sélection d'interfaces selon la revendication 3, **caractérisé en ce que** le dispositif d'émission (2) actif est modifié sans interruption de la liaison de communication (18) établie, et **en ce que** le système de communication (7) est connecté à deux dispositifs d'émission (2) par le commutateur de voie de communication, lesquels deux dispositifs d'émission présentent une caractéristique de rayonnement sectorielle en chevauchement.

5. Procédé de sélection d'interfaces selon l'une des revendications 1 à 4, **caractérisé en ce que** les données de position du véhicule (1) sont reçues par un système global de navigation par satellite, au moyen d'un dispositif de réception (9) du véhicule.

6. Procédé de sélection d'interfaces selon l'une des revendications 1 à 4, **caractérisé en ce que** des données de localisation sont émises de façon cyclique par un système automatisé d'identification du véhicule (1) et/ou de la station distante, et sont reçues par un dispositif de réception du véhicule (1).

7. Procédé de sélection d'interfaces selon la revendication 6, **caractérisé en ce qu'**un code d'identification est extrait des données de localisation reçues et est stocké comme code de véhicule et/ou de station distante dans la base de données du module de commande de communication (8).

8. Procédé de sélection d'interfaces selon la revendication 7, **caractérisé en ce qu'**une sélection de codes de stations distantes mémorisés est affectée à un code de groupe, puis mémorisée.

9. Procédé de sélection d'interfaces selon la revendication 8, **caractérisé en ce que** le vecteur directionnel (13) n'est réalisé que pour les stations distantes pour lesquelles un code de groupe est mémorisé dans la base de données.

10. Procédé de sélection d'interfaces selon l'une des revendications 1 à 9, **caractérisé en ce que** des données de position d'au moins une station distante fixe sont mémorisées dans la base de données.

11. Procédé de sélection d'interfaces selon l'une des revendications 1 à 10, **caractérisé en ce que** les données de localisation sont reçues par l'au moins une station distante au moyen d'un dispositif de réception (9).

12. Procédé de sélection d'interfaces selon l'une des revendications 1 à 10, **caractérisé en ce que** les données de localisation sont mémorisées dans le module de commande de communication (8), en particulier dans la base de données.

13. Procédé de sélection d'interfaces selon l'une des revendications 1 à 3 et 5 à 12, **caractérisé en ce que** le commutateur de voie de communication relie le système de communication (7) à deux dispositifs d'émission (2), lesquels dispositifs d'émission présentent une caractéristique de rayonnement sectorielle en chevauchement.

14. Véhicule (1), en particulier bateau ou aéronef, comprenant une interface de communication à haute fréquence sans fil et un système de communication (7) qui y est connecté,
dans lequel l'interface de communication à haute fréquence présente au moins deux dispositifs d'émission (2), lesquels dispositifs d'émission (2) présentent respectivement une caractéristique de rayonnement sectorielle (5), laquelle caractéristique de rayonnement (5) correspond à une zone partielle de l'espace autour du véhicule (1), dans lequel
- chaque dispositif d'émission (2) est connecté au système de communication (7) par l'intermédiaire d'un commutateur de voie de communication (6), dans lequel
- le commutateur de voie de communication (6) est connecté à un module de commande de communication (8) qui est conçu pour connecter sélectivement le système de communication (7) à un dispositif d'émission (2), au moyen du commutateur de voie de communication (6), dans lequel
- un dispositif de réception (9) connecté au module de commande de communication (7) est prévu, lequel dispositif de réception est conçu pour recevoir des paquets de messages (10) d'un système d'identification automatisé, dans lequel
- le module de commande de communication (8) présente un module d'évaluation (11) qui forme un vecteur directionnel (13) à partir des données de position (12) du véhicule et à partir des données de position (12) extraites des paquets de messages (10) reçus, qui détermine une affectation (14) du vecteur directionnel (13) à un secteur ou à une caractéristique de rayonnement et qui transmet, en tant que valeur de sélection (15), au commutateur de voie de communication (6), dans lequel
- le commutateur de voie de communication (6) définit une voie de communication entre le système de communication (7) et l'un des dispositifs d'émission (2) sur la base de la valeur de sélection (15),
**caractérisé en ce que**
- le module de commande de communication (8) présente une base de données et la base de données est conçue pour stocker des données de position d'au moins une source d'interférences, notamment une source d'interférences fixe, **en ce que**
- le module d'évaluation (11) est également conçu, lors de la détermination du vecteur directionnel, pour former en outre un vecteur d'interférence qui définit la direction et la distance du véhicule (1) à la source d'interférences, et **en ce que**,
- sur la base de ces informations de distance, un protocole de communication, en particulier la durée et l'emplacement des pauses de communication, peut être adapté de telle manière que les signaux réfléchis sont masqués ou supprimés le plus possible.

15. Véhicule selon la revendication 14, **caractérisé en ce que** chaque dispositif d'émission présente une unité à haute fréquence (4) et une antenne (3).

16. Véhicule selon la revendication 15, **caractérisé en ce que** chaque dispositif d'émission (2) présente également un dispositif de réception.

17. Véhicule selon l'une des revendications 14 à 16, **caractérisé en ce que** l'interface de communication à haute fréquence présente quatre dispositifs d'émission (2), la caractéristique de rayonnement (5) de chaque dispositif d'émission (2) couvrant une zone partielle azimutale comprise entre 85° et 100°, en particulier entre 90° et 95°.

18. Véhicule selon l'une des revendications 14 à 17, **caractérisé en ce que** le véhicule (1) comporte un système d'identification automatisé conçu pour transmettre de façon cyclique des paquets de messages d'identification (10).

19. Véhicule selon l'une des revendications 14 à 18, **caractérisé en ce que** le véhicule comporte un récepteur pour un système global de navigation par satellite, lequel récepteur fournit des données de position du véhicule.
